**Europäisches Patentamt**

**European Patent Office**

**Office européen des brevets**

(19)

(11) Veröffentlichungsnummer: **0 231 428 B1**

(12) **EUROPÄISCHE PATENTSCHRIFT**

(45) Veröffentlichungstag der Patentschrift: **21.11.91**

(51) Int. Cl.5: **H02G 3/04**, H01R 25/16

(21) Anmeldenummer: **86111329.8**

(22) Anmeldetag: **16.08.86**

(54) **Versorgungs- und Verteilerkanal, insbesondere für elektrische Verbraucher und Kommunikationseinrichtungen.**

(30) Priorität: **05.02.86 DE 8602883 U**

(43) Veröffentlichungstag der Anmeldung:
**12.08.87 Patentblatt 87/33**

(45) Bekanntmachung des Hinweises auf die
Patenterteilung:
**21.11.91 Patentblatt 91/47**

(84) Benannte Vertragsstaaten:
**AT BE CH DE FR GB IT LI LU NL SE**

(56) Entgegenhaltungen:
**EP-A- 0 106 535**
**BE-A- 727 904**
**DE-U- 7 728 373**

(73) Patentinhaber: **Horst Warneke Vermietungen
und Verpachtungen**
**Syker Strasse 205-213**
**2819 Thedinghausen(DE)**

(72) Erfinder: **Warneke, Horst**
**Syker Strasse 205-213**
**W-2819 Thedinghausen(DE)**

(74) Vertreter: **Hanewinkel, Lorenz, Dipl.-Phys.**
**Patentanwalt Ferrariweg 17a**
**W-4790 Paderborn(DE)**

## Beschreibung

Ein Versorgungs- und Verteilerkanal entsprechend dem Oberbegriff des Patentanspruche 1 ist durch die EP-A-0 106 535 bekannt geworden.

Die Erfindung bezweckt die Schaffung eines einfach aufgebauten, kostensparend herstellbaren und leicht zu handhabenden Versorgungs-und Verteilerkanales, der einerseits eine Stromabnahme an beliebigen Stellen und andererseits eine lage- und elektrisch gesicherte Unterbringung der verschiedensten Kommunikationskabel und anderer Versorgungsleitungen ermöglicht und in sich ein geschlossenes universelles Stromsystem bildet.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf deren Kombination

Der erfindungsgemäße Versorgungs- und Verteilerkanal ergibt folgende Vorteile:

1. Der Kanal besteht aus einem U-förmigen Kanalprofil und einer damit unter Rastverbindung lösbar verbindbaren plattenförmigen Abdekkung, und diese beiden Teile sind als Strangprofile kostengünstig herstellbar und auf die beliebigen Längen abtrennbar.

2. In dem Kanalprofil ist einerseits eine Stromvertielerschiene zum Anschluß von Stromabnehmern und andererseits ein separates Abdeckprofil zur gegenüber der Stromverteilerschiene elektrisch geschützten Verlegung von Kommunikationskabel untergebracht, wodurch in einem einzigen Kanal eine beliebige Stromabnahme und ein einwandfreies Verlegen von Kommunikationskabel möglich ist.

3. Weiterhin läßt sich an dem Kanalprofil außenseitig ein zweites Kanalprofil für die abgeschirmte Aufnahme der Kommunikationskabel anbringen.

4. Durch den Einsatz eines zweiten, kleineren Kanalprofiles mit Stromverteilerschiene im Kanalprofil können mehrere Stromkreise erreicht werden.

5. Die Stromverteilerschiene ist mit insgesamt fünf elektrischen Leitern ausgestattet, von denen einer den Nulleiter und die anderen vier die Phasen bilden, so daß mit dieser Stromverteilerschiene auch eine Wechselschaltung möglich ist.

6. Die Abdeckung und auch der Stromabnehmer gehen bei der Verbindung mit einem zusätzlichen Erdungsleiter einen sicheren Kontakt automatisch ein, wodurch ein einwandfreier elektrischer Schutz gewährleistet wird.

7. Die Abdeckung stellt einerseits nur ein Schließteil zum Abschluß der offenen Kanalprofilseite dar und dient andererseits gleichzeitig zur Halterung von elektrischen Einrichtungen, wie Steckdose, Schalter, Lautsprecher, Uhr, Infrarotempfänger od. dgl., und ergibt mit dem jeder elektrischen Einrichtung zugeordneten Stromabnehmer eine fertig montierte Baueinheit.

8. Weiterhin läßt sich in dem Kanalprofil eine Leuchte unterbringen, wodurch die Schiene als Lichtband oder Kojenleuchte eingesetzt werden kann.

9. An dem Kanalprofil kann an beliebigen Stellen ein Leuchtensockel mit/ohne Schalter festgelegt werden, der ebenfalls über einen Stromabnehmer mit der Stromverteilerschiene verbindbar ist und der eine Wand- oder Standleuchte an der Schiene hält.

10. Ein zweigeteilter, mit Keilwirkung oder Dreh-Spannverschlüssen arbeitender und mit einem Adapter ausgestatteter Leuchtenfuß ist in dem Kanalprofil lagestabil festlegbar und nimmt an einer auswechselbaren Aufnahmeplatte verschiedene Leuchtensockel auf; durch diesen Leuchtenfuß können auch schwere Leuchten sicher angebracht werden - der innenliegende Leuchtenfuß wird nach außen hin unsichtbar überdeckt.

11. Einfach aufgebaute und leicht zu handhabende Innen- und Außeneckverbinder, Längsverbinder und Endkappen aus Kunststoff stellen eine von außen als durchgehende Schiene erscheinende Verbindung aneinandergereihter Schienen dar und geben einen guten Endabschluß.

12. Durch die Eckverbinder ist eine winklige Verbindung der Stangprofile in senkrechter und Waagerechter Ebene möglich und über in die Eckbereiche der Strangprofile in die Stromverteilerschiene eingesetzte Stromabnehmer efolgt die elektrische Verbindung, so daß eine in mehrere Richtungen verlaufende Schiene ein einheitliches Stromabnahme- und Kommunikationssystem ergibt.

13. Der Versorgungs- und Verteilerkanal bildet aufgrund seiner besonderen Konstruktion ein universelles Stromschienensystem, in dem mit herkömmlicher, am Markt befindlicher Adapter und auch durch den speziell erfindungsgemäßen Adapter die verschiedensten und speziell entwickelten Bausteine, wie Leuchten, Steckdosen- und Schaltereinsätze, Radios, Uhren, Gegensprechanlagen, alle Art an Zeitmeßgeräten, angeschlossen werden können.

14. Weiterhin ist in dem Kommunikationskanal auch der Einsatz von Luftschläuchen, Wasserleitungen und anderen Versorgungsleitungen möglich.

15. In dem Raum zwischen Kommunikationskanal und Stromschiene ist Platz vorhanden, der die Aufnahme der verschiedensten Bausteine und Versorgungsleitungen ermöglicht.

16. Auch ist eine Datenübertragung durch den oder die Leiter der Stromschiene und daran eine Adaptierung möglich.

17. Das Kanalprofil ist sichtseitig mit einer ansprechenden Oberflächenausführung, wie Echtholzfurnier, Farb- oder Kunststoffbeschichtung, ausgestattet.

Anhand der Zeichnungen werden nachfolgend Ausführungsbeispiele gemäß der Erfindung näher erläutert. Es zeigt:

Fig. 1
eine Stirnansicht in Explosionsdarstellung eines Versorgungs- und Verteilerkanales mit einem U-förmigen Kanalprofil, einer plattenförmigen Abdeckung, einer Stromverteilerschiene und einem separaten Abdeckprofil,

Fig. 2
eine Stirnansicht des Versorgungs- und Verteilerkanales im zusammengebauten Zustand mit eingesetztem Stromabnehmer und Steckdose,

Fig. 3
eine Stirnansicht des Versorgungs- und Verteilerkanales mit eingesetztem Stromabnehmer und eingesetzter Leuchtstoffleuchte,

Fig. 3a
einen Querschnitt durch den Versorgungs- und Verteilerkanal in abgeänderter Ausführung,

Fig. 4
eine Stirnansicht im teilweisen Querschnitt eines Versorgungs- und Verteilerkanales mit zwei Stromverteilerschienen und einem zusätzlichen, außen angebrachten Kanal für Kommunikationskabel,

Fig. 5
eine Stirnansicht eines Versorgungs- und Verteilerkanales in kleinerer Bauweise mit einer Stromverteilerschiene und außen angebrachtem Kanal für Kommunikationskabel,

Fig. 6
eine Längsansicht eines Stromabnehmers von der der Stromverteilerschiene abgewandten Seite her gesehen,

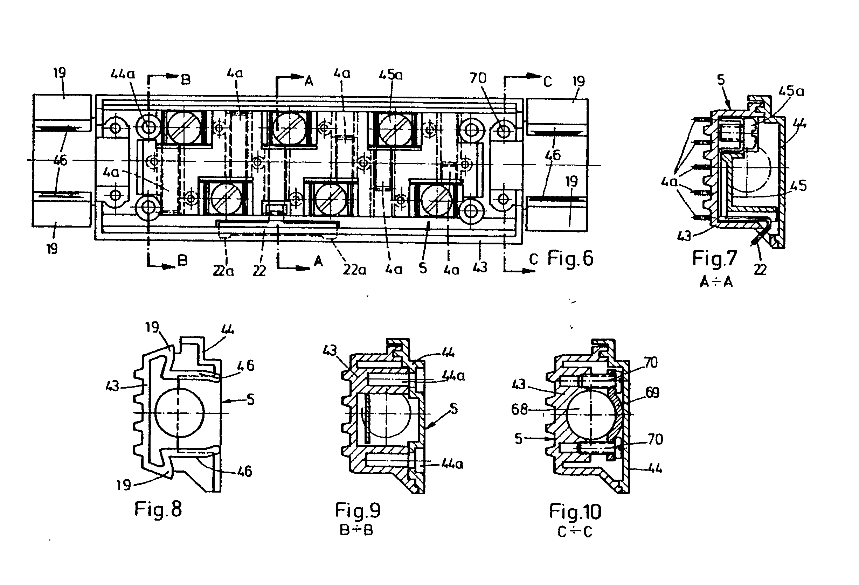

Fig. 7
einen Querschnitt durch den Stromabnehmer gemäß Schnittlinie A-A in Fig. 6 im Bereich der Erdleiterbefestigung,

Fig. 8
eine Stirnansicht des Stromabnehmers,

Fig. 9
einen Querschnitt durch den Stromabnehmer gemäß Schnittlinie B-B in Fig. 6 im Gehäuse-Deckel-Verbindungsbereich,

Fig. 10
einen Querschnitt durch den Stromabnehmer gemäß Schnittlinie C-C in Fig. 6 im Bereich der Zugentlastung,

Fig. 11
eine Draufsicht auf einen Teil der Abdeckung mit Ausschnitt für eine Steckdose,

Fig. 12
einen Querschnitt durch dieselbe Abdeckung,

Fig. 13 und 14
eine Draufsicht und Seitenansicht einer Gerätedose zur Aufnahme einer Steckdose,

Fig. 15
eine perspektivische Darstellung des Versorgungs- und Verteilerkanales mit Standleuchte im noch nicht befestigten Zustand der Leuchte,

Fig. 16
einen Querschnitt durch den Versorgungs- und Verteilerkanal mit daran gehaltenem Leuchtenfuß,

Fig. 17
eine perspektivische Ansicht des in waagerechter Richtung um eine Ecke geführten Versorgungs- und Verteilerkanales mit Endkappe, Längs- und Eckverbinder,

Fig. 18 bis 18b
drei Ansichten des Längsverbinders,

Fig. 19 bis 19b
drei Ansichten der Endkappe,

Fig. 20 und 20a
eine Seitenansicht und eine Draufsicht des Eckverbinders,

Fig. 21
eine Stirnansicht des Versorgungs- und Verteilerkanales mit innenliegendem Leuchtenfuß,

Fig. 22
eine Seitenansicht des Leuchtenfußes,

Fig. 23 und 24
eine Stirnansicht und eine Draufsicht auf in waagerechter und senkrechter Ebene miteinander verbundenen, an Baukörperflächen festgelegten Versorgungs- und Verteilerkanäle.

Fig. 25 und 26
eine Stirnansicht und eine Draufsicht auf einen in das Kanalprofil eingesetzten Adapter in weiterer Ausführung.

Mit 1 ist ein Kanalprofil aus Metall, vorzugsweise Leichtmetall, bezeichnet, welches einen U-förmigen Querschnitt besitzt und welches an seiner offenen, die Zugangsseite bildenden U-Seite durch eine lösbare Abdeckung 12 verschlossen ist; Kanalprofil 1 und Abdeckung 8 bilden einen im Querschnittsumfang geschlossenen Versorgungs- und Verteilerkanal für elektrische Einrichtungen und Kommunikationseinrichtungen.

In dem Kanalprofil 1 ist an einem U-Schenkel 2 eine, mehrere elektrische Leiter 4 aufweisende Stromverteilerschiene 3 aus einem Kunststoffprofil für die lösbare elektrische Verbindung mit einem Stromabnehmer (Adapter) 5 festgelegt und der andere U-Schenkel 6 des Kanalprofiles 1 bildet mit mindestens einem separaten Abdeckprofil 7/8 mindestens einen abgeschirmten Kanal 9 für mindestens ein Kommunikationskabel 10.

Der Kanal 9 für das oder die Kommunikationskabel 10 liegt innerhalb und/oder außerhalb des Kanalprofiles 1.

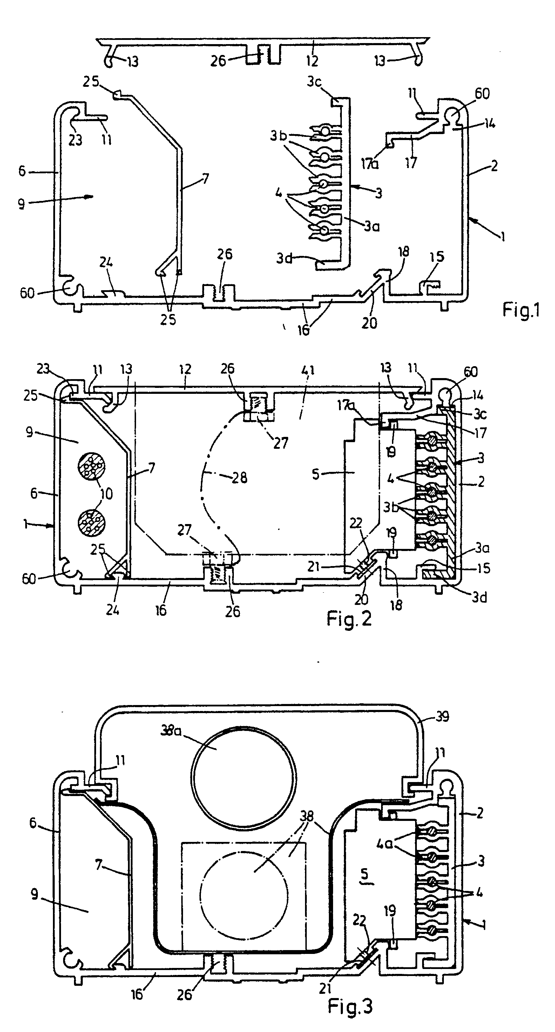

Das Kanalprofil 1 gemäß den Ausführungen nach Fig. 1, 2, 3 und 4, 6, 21, hat an den freien Enden seiner beiden U-Schenkel 2, 6 je eine zum Profil-Innenraum hin abgewinkelte und zum gegenüberliegenden U-Schenkel 2,6 zeigende Halteleiste 11 hinter denen die Abdeckung 12 mit an der Innenseite dieser Abdeckung an deren beiden Längsränder angeformten Klemmleisten 13 unter Rastverbindung lösbar gehalten ist. Diese Klemmleisten 13 verlaufen schräg nach außen divergierend und sind am freien Ende aufeinanderzu abgebogen, so daß ein Einrasten zwischen die Halteleisten 11 und ein Verrasten hinter den Halteleisten 11 möglich ist.

Die Abdeckung 12 ist plattenförmig ausgebildet und erstreckt sich über die gesamte Länge des Kanales bzw. ist an den gewollten Zugriffstellen des Verteiler- und Versorgungskanales abgetrennt bzw. unterbrochen.

Die Stromverteilerschiene 3 besitzt ein innenseitig am Kanalprofil-U-Schenkel 2 anliegendes Kunststoffprofil 3a mit U-förmigem Querschnitt und mit am U-Steg angeformten Aufnahmeprofilen 3b für je einen elektrischen Leiter 4.

Dieses Kunststoffprofil 3a ist mit seinem einen U-Schenkel 3c in einer Nut 14 zwischen U-Schenkel 2 und Halteleiste 11 und mit dem anderen U-Schenkel 3b hinter einer an diesen U-Schenkel 3d anrollbaren, im Querschnitt winkelförmigen und vorzugsweise verzahnten Halteleiste 15 des U-Steges 16 im Kanalprofil 1 lagemäßig festgelegt.

An die Halteleiste 11 des Kanalprofil-U-Schenkels 2 schließt sich eine mit diesem U-Schenkel 2 die Nut 14 für das Kunststoffprofil 3a bildende Arretierleiste 17 an, die einen stumpfwinkligen Querschnitt hat und in den Kanalprofilinnenraum hineinragt. An dem Kanalprofil-U-Steg 16 ist ein winklig dazu stehender und zur Arretierleiste 17 zeigender Arretiersteg 18 angeformt. Arretierleiste 17 und Arretiersteg 18 dienen zur mechanischen Festlegung des Stromabnehmers 5, der mit an seinen beiden Längenenden angeordneten, federnd gehaltenen Halter 19 hinter dem Arretiersteg 18 und hinter eine abgewinkelte freiendseitige Nase 17a der Arretierleiste 17 greift.

Weiterhin ist im Bereich des Arretiersteges 18 an den Kanalprofil-U-Steg 16 eine schräge Aufnahmeleiste 20 angeformt, in der ein Erdleiter 21 lagert, mit dem der Stromabnehmer 5 mit einem Erdleiter 22 kontaktierbar ist.

Die am Kanalprofil-U-Schenkel 6 angeformte Halteleiste 11 besitzt eine zum U-Schenkel 6 hin gerichtete Arretierkante 23 und der Kanalprofil-U-Steg 16 ist mit einer angeformten Arretiernase 24 ausgestattet; das Abdeckprofil 7 zeigt an seinen beiden Längsrändern angeformte Klemmleisten 25, die hinter die Arretierkante 23 und -nase 24 unter Rastverbindung fassen.

Das Abdeckprofil 7 ist von einer im Querschnitt strumpfwinkligen Platte gebildet, die am parallel zum Kanalprofil-U-Schenkel 6 verlaufenden Plattenteil eine gabelartige, die Arretiernase 24 über- und untergreifende Klemmleiste 25 und am abgewinkelten Plattenteil eine hinter die Arretierkante 23 fassende, hakenartige Klemmleiste 25 aufweist.

Im befestigten Zustand des Abdeckprofiles 7 bildet dieses mit dem U-Schenkel 6 und einem Teil des U-Steges 16 einen geschlossenen Kanal 9, in dem die Kommunikationskabel 10 lose verlegt werden können und diese Kabel sind dann zur Stromverteilerschiene 3, zum Adapter 5 und auch zu den eingebauten elektrischen Geräten elektrisch abgeschirmt.

Am Kanalprofil-U-Steg 16 und an der plattenförmigen Abdeckung 12 ist je ein Schraubkanal 26 angeformt, der sich jeweils über die gesamte Länge des Kanalprofiles 1 und der Abdeckung 12 erstreckt und an dem elektrische Bauelemente, wie Steckdose, Schalter, Lautsprecher, Uhr, Infrarotempfänger od. dgl. befestigt werden können.

Weiterhin finden die beiden Schraubkanäle 26 für die Erdung Verwendung, indem eine das Kanalprofil 1 mit der Abdeckung 12 verbindende, flexible Erdungsleitung durch in die Schraubkanäle 26 eingeschraubte Schrauben 27 an beiden Bauteilen 1, 12 festlegbar ist.

Die Stromverteilerschiene 3 ist in bevorzugter Weise mit fünf Leitern 4 ausgerüstet, von denen vier als Phasen und einer als Nulleiter verwendet wird. Die Leiter 4 lassen sich mit kreisförmigem oder eckigem Querschnitt ausstatten.

In Fig. 2 ist unter der Abdeckung 12 eine in das Kanalprofil 1 hineinragende Gerätedose 41 zur Aufnahme einer Steckdose in strichpunktierten Linien dargestellt.

In Fig. 3 ist in dem Kanalprofil 1 eine Leuchtstoffröhrenleuchte 38 eingesetzt, die mit ihrer Halterung oder mit Einzelteilen auf dem Schraubkanal 26 des Kanalprofiles 1 befestigt ist.

Bei der dargestellten Leuchte 38 hat diese eine außenliegende Leuchtstoffröhre 38a, und diese wird von einer gewölbten, klarsichtigen oder durchscheinenden Abdeckung 39 überdeckt, die ebenfalls unter Rastverbindung an den Halteleisten 11 lösbar festlegbar ist. Weiterhin kann auch die Leuchtstoffröhre 38a innerhalb des Kanalprofiles liegen und dann wird diese von einer ebenen Abdeckung 39 überdeckt. Hierbei bildet dann die Leuchte ein Lichtband und kann als Hinweisleuchte (Piktogrammleuchte) mit Beschriftungen, Symbolen od. dgl. verwendet werden.

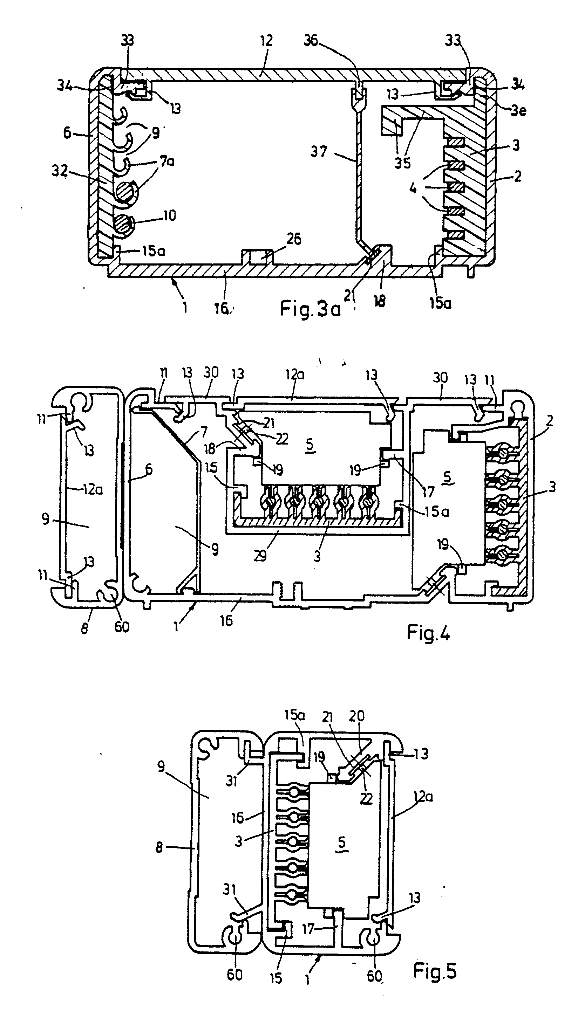

Gemäß der weiteren Ausführung des Versorgungs- und Verteilerkanales gemäß Fig. 4 ist in das Kanalprofil 1 ein zweites, im Querschnitt kleineres und zwischen dem Kanal 9 und dem eingesetzten Stromabnehmer 5 liegendes Kanalprofil 29 mit Stromverteilerschiene 3 eingesetzt. Dieses zweite Kanalprofil 29 hat an seiner offenen Profilseite nach außen gerichtete Befestigungsleisten 30, die mit der Abdeckung 12 entsprechenden Klemmleisten 13 hinter den Halteleisten 11 des Kanalprofiles 1 verrasten.

Die offene Zugangsseite dieses Kanalprofiles 29 wird durch eine zwischen den Befestigungsleisten 30 lösbar einrastende, plattenförmige Abdeckung 12a verschlossen.

Die Stromverteilerschiene 3 liegt im zweiten Kanalprofil 29 parallel zum U-Steg 16 des größeren Kanalprofiles 1 und ist entsprechend der Ausführung nach Fig. 1 bis 3 in dem Kanalprofil lagefixiert. Auch erfolgt die elektrische und mechanische Verbindung des Adapters im zweiten Kanalprofil 29 gemäß der Ausführung nach Fig. 1 bis 3 und demzufolge sind für gleiche Bauteile auch die gleichen Bezugszahlen eingesetzt worden.

Durch das zweite Kanalprofil 29 mit Stromverteilerschiene 3 werden in dem Versorgungs- und Verteilerkanal mehrere Stromkreise erzielt. An dem den Kanal 9 aufweisenden Kanalprofil-U-Schenkel 6 ist außenseitig ein zweites im Querschnitt U-förmiges und an der offenen Querschnittsseite durch eine verrastbare Abdeckung 12a verschließbares Kanalprofil 8 durch Schrauben od. dgl. befestigt, welches einen zweiten Kanal 9 für Kommunikationskabel 10 bildet.

In Fig. 5 ist eine weitere Ausführung des Versorgungs- und Verteilerkanales dargestellt, der ein im Querschnitt U-förmiges, jedoch gegenüber dem vorbeschriebenen Kanalprofil 1 kleineres Kanalprofil 1 hat, indem eine Stromverteilerschiene 3 eingesetzt ist und das einen Adapter 5 aufnimmt und das an seiner Zugangsseite ebenfalls durch eine Abdeckung 12a verschließbar ist. Dieses Kanalprofil 1 nimmt in sich keinen Kommunikationskanal 9 auf, sondern dieser wird durch ein zweites, außen am Kanalprofil 1 lösbar befestigtes Kanalprofil 8 gebildet. Hierfür sind an dem U-Steg 16 des Kanalprofiles 1 Halteleisten außenseitig angeformt und das zweite Kanalprofil 8 ist mit seiner offenen Kanalseite unter Steck- und Rastverbindung lösbar an diesen Halteleisten 31 festlegbar. Bei diesem Kanal ist die Stromverteilerschiene 3 am U-Steg 16 liegend durch die Arretieransätze 15, 15a lagefixiert und der Ansatz 20 bildet gleichzeitig mit dem Ansatz 17 die mechanische Verriegelung für den Adapter 5.

Bei der weiteren Ausführung nach Fig. 3a bildet ein leistenförmiges, innenseitig an dem U-Schenkel 6 lagefixiert anliegendes Halteprofil 32 aus Kunststoff mit mehreren an der dem U-Schenkel 6 abgewandten Halteprofilseite angeformten, rinnenförmigen Haltern 7a mit unterschiedlichen Querschnittsgrößen Kommunikationskanäle 9, indem in jeden Halter 7a ein Kommunikationskabel 10 lagegesichert und abgeschirmt eingelegt werden kann.

Die beiden U-Schenkel 2,6 sind an ihrem freien Schenkelende mit je einer angeformten Abwinklung 33 ausgestattet, wobei diese beiden Abwinklungen 33 in Richtung U-Steg 16 und aufeinanderzu gerichtet sind und jeweils mit dem U-Schenkel 2,6 eine Aufnahmenut bilden.

Auf dem U-Steg 16 hebt sich im Bereich jeder Abwinklung 33 jeweils ein Haltesteg 15a ab, der ebenfalls mit dem U-Schenkel 2,6 eine Aufnahmenut ergibt.

In diesen beiden, jedem U-Schenkel 2,6 zugeordneten Aufnahmenuten ist einerseits die Stromverteilerschiene 3 und andererseits das Halteprofil 32 eingeschoben ehalten, wobei zur sicheren Lagefixierung die Abwinklungen 33 innenseitig mit auf die Kunststoffprofile 3, 32 einwirkenden Verzahnungen 34 ausgestattet sind.

Die Abwinklungen 33 und Haltestege 15a erstrecken sich über die gesamte Länge des Kanalprofiles 1 und zum Einbringen der Kunststoffprofile 3, 32 durch Einschieben in Kanalprofillängsrichtung sind die Abwinklungen 33 leicht nach oben schräg stehend vorgesehen, so daß die Verzahnung 34 während des Einschiebens mit Spiel zu den Kunststoffprofilen 3, 32 steht und nach dem Einbringen der Kunststoffprofile 3, 32 werden die Abwinklungen 33 nach unten und gegen die Kunststoffprofile 3, 32 gedrückt, wodurch sich die Verzahnung 34 in die Kunststoffprofile 3, 32 einprägt und diesen einen sicheren Halt gibt.

Die Stromverteilerschiene 3 hat bei dieser Ausführung einen rechteckigen Querschnitt und greift mit einem Rechteckbereich zwischen Haltesteg 15a und U-Schenkel 2 ein und faßt mit einer abgesetzten Halteleiste 3e zwischen Abwinklung 33 und U-Steg 2.

Die Stromverteilerschiene 3 besitzt des weiteren im Abstand unterhalb der Abwinklung 33 einen im Querschnitt winkelförmigen Arretieransatz 35 und auf dem U-Steg 16 hebt sich ein Arretieransatz 18 ab, der zwischen sich und Haltesteg 15a eine Arretiernut bildet. Gegenüber dieser Arretiernut ergibt der winkelförmige Arretieransatz 35 eine zweite Arretiernut und in beide Nuten sowie an den Arretieransätzen 18, 35 läßt sich der Stromabnehmer 5 an der gewünschten Schienenlängenstelle lagegesichert festsetzen.

Der Erdleiter 21 ist im Arretieransatz 18 festgelegt.

Die Abdeckung 12 hat innenseitig einen angeformten Haltesteg 36, an dem eine mit dem Erdleiter 21 des Kanlprofiles 1 in der geschlossenen Abdeckstellung kontaktierende Erdungsfahne 37 festgelegt ist.

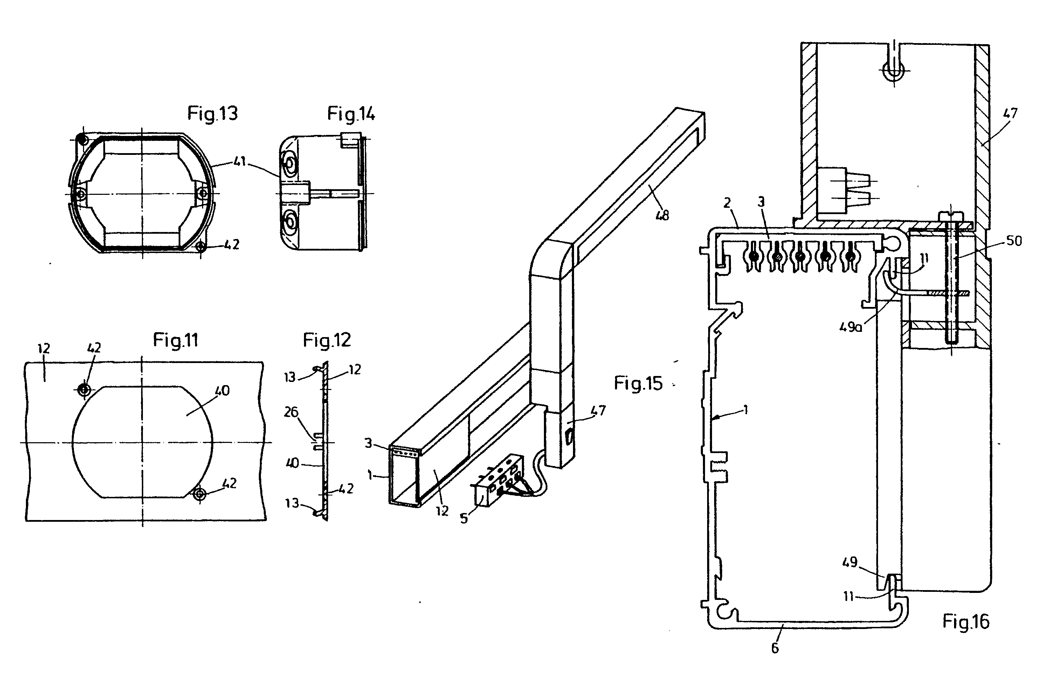

In der Abdeckung 12 sind ein oder mehrere Ausschnitte 40 ausgespart, in deren Bereich unter der Abdeckung 12 jeweils eine Gerätedose 41 für die Aufnahme von Steckdosen, Schalter od. dgl. durch Schrauben 42 od. dgl. befestigt wird (vgl. Fig. 11 bis 14).

Nunmehr wird Bezug auf die Ausführung des Stromabnehmers 5 gemäß den Figuren 6 bis 10 genommen. Der Stromabnehmer 5 hat ein zweigeteiltes, langgestrecktes Gehäuse und zwar ein Gehäuseunterteil 43 und einen durch Schrauben 44a am Unterteil 43 gehaltenen Deckel 44. In diesem Gehäuse 43, 44 ist für jeden elektrischen Leiter 4a und für den Erdleiter 22 ein Isolierteil 45 untergebracht und die Leiter 4a/22 werden jeweils durch eine Schraube 45a im Isolierteil 45 festgelegt, wobei die Leiter 4a aus einer Längsseite des Gehäuses 43, 44 herausragen und der Erdleiter 22 an einer winklig dazu stehenden Seite aus dem Stromabnehmer 5 austritt.

An beiden Längenenden sind die Halter 19 für die mechanische Befestigung des Stromabnehmers 5 im Kanalprofil vorgesehen, die an federnden Löseschenkeln 46 angeordnet sind, so daß sie beim Einbringen in das Kanalprofil 1 flexibel und nachgebend sind und zum anderen durch Zusammendrükken der Löseschenkel 46 aus ihrer verrasteten Stellung zur Entnahme des Stromabnehmers 5 gebracht werden können.

Diese keilartig ausgebildeten Halter 19 greifen in ihrer verrasteten Stellung hinter die Arretiernase 17a und hinter den Arretiersteg 18.

Der Erdleiter 22 ist vorzugsweise von einer in Längsrichtung des Stromabnehmers verlaufenden, länglichen Platte mit endseitigen Kontaktpunkten 22a gebildet, durch die gewährleistet wird, daß auch bei verkantetem Einsatz des Stromabnehmers 5 in das Kanalprofil 1 immer ein Kontaktpunkt 22a mit dem Erdleiter 21 in Berührung kommt.

Aus Fig. 10 ist die Zugentlastung für die elektrische Versorgungsleitung 68 ersichtlich, die in bekannter Weise aus einem Klemmbügel 69 und Schrauben 70 besteht.

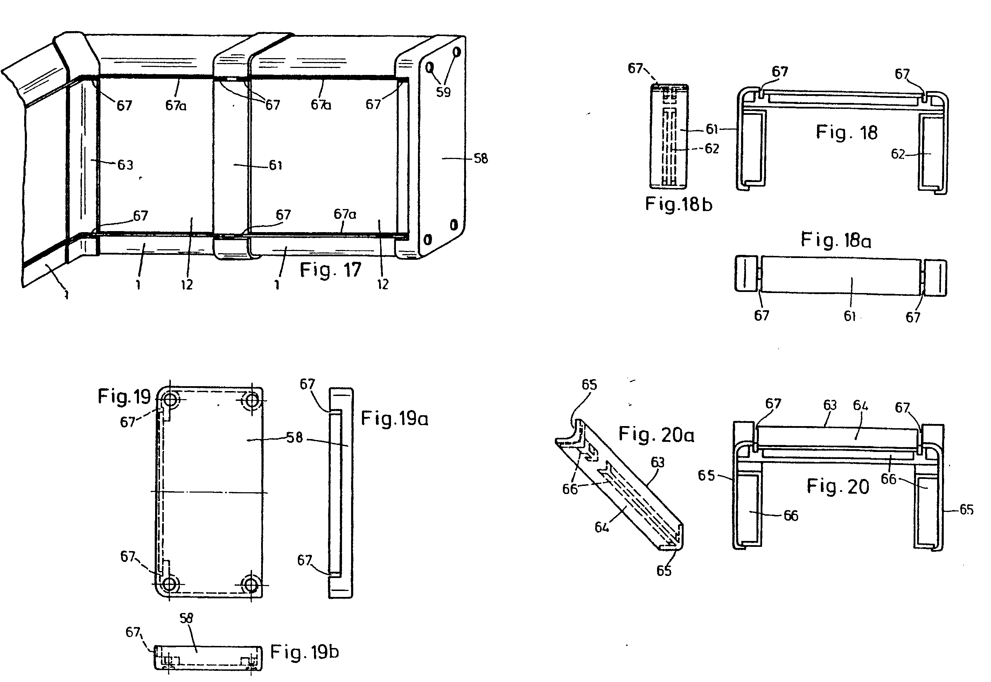

Fig. 15 und 16 zeigen einen am Kanalprofil 1 außenseitig lösbar festlegbaren und über eine elektrische Leitung mit einem Stromabnehmer ausgestatteten Leuchtensockel 47, einer Wand-, Hänge- oder Standleuchte 48. Dieser Leuchtensockel 47 wird an der offenen Kanalseite am Kanalprofil 1 festgelegt und greift dabei mit einem Steckansatz 49 über und hinter eine Halteleiste 11 und andererseits mit einer durch eine Schraube spannbaren Klemmleiste hinter die andere Halteleiste 11.

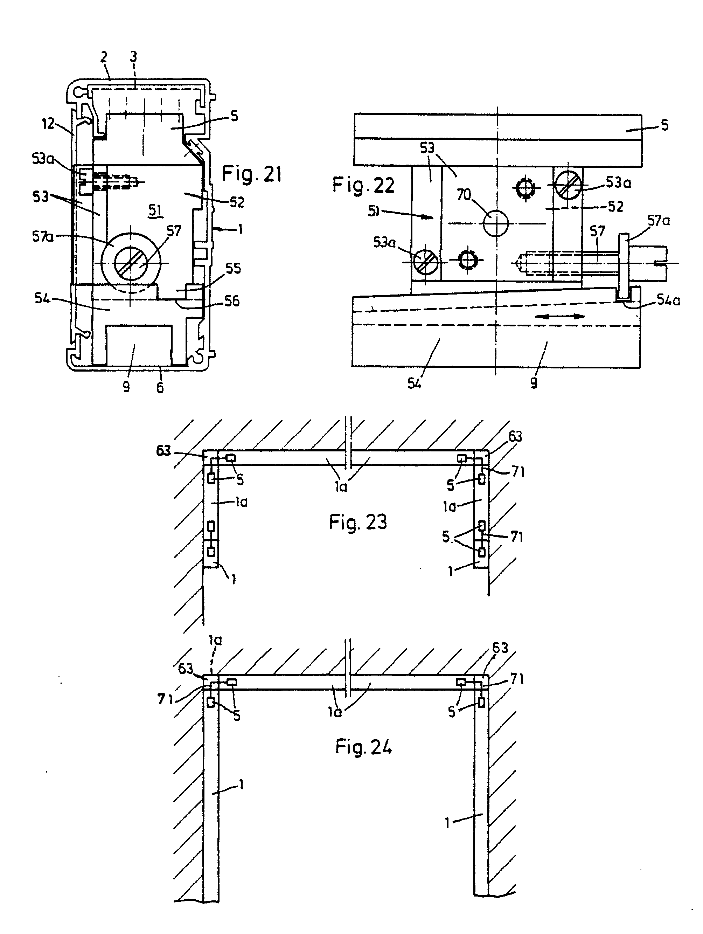

Fig. 21 und 22 zeigen einen innenliegend im Kanalprofil 1 lösbar festlegbaren Leuchtenfuß 51, der sich aus einem Basisteil 52 mit daran befestigtem Stromabnehmer 5, einer am Basisteil 52 auswechselbar befestigten Aufnahmeplatte 53 für die verschiedenen Leuchtensockel und einem Klemmkeil 54 zusammensetzt. An einer Seite des Basisteiles 52 ist der Adapter 5 angebracht und auf die gegenüberliegende Basisteilseite wirkt der Klemmkeil 54 ein, der mit einer Nut 56 eine Führungsleiste 55 des Basisteiles 52 geführt übergreift. Eine in Längsrichtung des Kanalprofiles 1 in das Basisteil 52 eingeschraubte Schraube 57 hat einen bundförmigen Mitnehmer 57a, der in eine Nut 54a des Klemmkeiles 54 einfaßt, so daß beim Verdrehen der Schraube 57 eine Verschiebung des Klemmkeiles 54 gegenüber dem Basisteil 52 erfolgt, was zum Festsetzen des Leuchtenfußes 51 im Kanalprofil 1 führt, indem der Klemmkeil 54 sich auf dem U-Schenkel 6 abstützt und den am Basisteil 52 angebrachten Adapter 5 gegen die Arretieransätze 17, 18 des Kanalprofiles 1 klemmend drückt. Hierdurch wird eine sichere und stabile Festlegung des Leuchtenfußes 51 im Kanalprofil 1 erreicht, so daß auch an diesem Leuchtenfuß 51 unterschiedlich schwere Leuchten sicher befestigt werden können.

Das Basisteil 52 und der Klemmkeil 54 bestehen aus Kunststoff.

Die Aufnahmeplatte 53 wird durch Schrauben 53a am Basisteil 52 auswechselbar für die verschiedenen Leuchtensockel gehalten. Die Aufnahmeplatte 53 ist seitlich abgestuft, so daß die Schraubenköpfe der Befestigungsschrauben 53a nicht die Aufnahmefläche der Aufnahmeplatte 53 beeinträchtigen.

Mit 70 ist eine Aussparung im Basisteil 52 und in der Aufnahmeplatte 53 für den elektrischen Kabelanschluß vom Adapter 5 zur Leuchte bezeichnet. Auch kann im Bereich dieser Aussparung (Bohrung, Gewindeloch od. dgl.) ein Leuchtensokkel befestigt werden.

Der Klemmkeil 54 hat eine zum U-Schenkel 6 hin offene und in Keilverschieberichtung durchgehende Aussparung, die einen abgeschirmten Kanal 9 für Kommunikationskabel 10 oder sonstiger Durchgangsverdrahtung der Schwachstromseite bildet.

Durch einfaches Verdrehen der Schraube 57 erfolgt die Verschiebung des Klemmkeiles 54 gegenüber dem Basisteil 52 und somit eine Festsetzung bzw. Lösung des innenliegenden Leuchtenfußes.

Der Leuchtenfuß 51 liegt vollkommen in dem Kanalprofil 1, so daß er außenseitig von der Abdeckung 12 unsichtbar überdeckt werden kann.

In Fig. 17 ist ein Endabschluß, eine Längsverbindung aneinandergereihter Kanalprofile sowie eine Eckverbindung winklig zueinander in gleicher Ebene verlaufender Kanalprofile 1 gezeigt. Das freie Stirnende eines Kanalprofiles wird durch eine Endkappe 58 aus Kunststoff verschlossen, die das Kanalprofilstirnende formschlüssig überfaßt und durch Schrauben 59 am Kanalprofil 1 befestigt wird. Für diese Befestigung besitzt das Kanalprofil 1 in den sich diagonal gegenüberliegenden Profilquerschnittsecken zwischen U-Schenkel 6 und U-Steg 16 sowie U-Schenkel 2 und Halteleiste 11 Schraublöcher 60 befinden, in die die Schrauben 59 eingreifen.

Der Kanalprofil-Längsverbinder 61 besteht ebenfalls aus Kunststoff und hat eine U-förmige Grundform. Dieser Längsverbinder 61 übergreift zwei benachbarte Kanalprofile 1 von deren offenen Kanalseite her dreiseitig formschlüssig und hat an seinen beiden U-Schenkeln innenseitig jeweils eine angeformte Trennwandung 62, durch die die elektrischen Leiter 4 der STromverteilerschiene 3 elektrisch geschützt überdeckt werden und gegen ungewollten Zugriff gesichert sind. Da beide U-Schenkel je eine Trennwandung 62 aufweisen, kann der Längsverbinder 61 wechselweise eingesetzt werden.

Die Befestigung des Längsverbinders 61 zwischen den aneinandergereihten Kanalprofilen 1 erfolgt durch Stecken, wobei die Trennwandungen 62 in den Spalt zwischen den Kanalprofilen 1 eingreifen.

Für die winklige Verbindung von Kanalprofilen 1 ist ein Eckverbinder 63 aus Kunststoff vorgesehen, der als Innen- oder Außenecke ausgebildet ist, einen U-förmigen Querschnitt mit nach innen oder außen gewölbtem Steg 64 hat und sich daran anschließende U-Schenkel 65 aufweist.

An dem Steg 64 den U-Schenkeln 65 sind innenseitig Trennwandungen 66 entsprechend dem Längsverbinder 61 angeformt. Dieser Eckverbinder 63 wird ebenfalls durch Stecken zwischen den winklig zueinander stehenden Kanalprofilen 1 gehalten.

Die Endkappe 58 gemäß Fig. 19, der Längsverbinder 61 gemäß Fig. 18 und der Eckverbinder 63 gemäß Fig. 20 übergreifen immer die U-Schenkel 2 und 6 des Kanalprofiles 1 außenseitig, so daß der Stoßbereich bzw. das Stirnende auch sichtseitig abgedeckt ist. Weiterhin haben der Längs- und Eckverbinder 61, 63 und die Endkappe 58 im Stoßbereich zwischen Abdeckung 12 und U-Schenkeln 2, 6 bzw. Halteleisten 11 jeweils eine Nut 67, durch die die zwischen Abdeckung 12 und Kanalprofil 1 verlaufenden Stoßkanten 67a auch im Bereich der Verbinder 61, 63 und der Endkappe 58 weitergeführt werden und dadurch ein einheitliches, durchgehendes Erscheinungsbild entsteht.

Der Versorgungs- und Verteilerkanal gestattet, wie in Fig. 23 und 24 schematisch dargestellt, die Herstellung eines Schienensystems in waagerechter und senkrechter Richtung, so daß die Kanäle von Wand zu Wand und von Wand zu Decke durchgehend verlegt werden können.

Hierfür sind an den Längenenden der Kanalprofile 1 die Innen- bzw. Außeneckverbinder 63 eingesetzt. Um die elektrische Verbindung in den Eckbereichen zu erhalten wird in die Kanalprofile 1 ein sich aus zwei Adaptern 5 und einem Elektrokabel 71 gebildeter Verbindungsadapter eingesetzt, d.h., in jede Schiene ein Adapter 5 und um die Ecke herum verläuft in den Eckverbinder 63 dann das flexible Elektrokabel 71.

Es ist bevorzugt, die beiden an sich gegenüberliegenden Wandungen angeordneten Versorgungs- und Verteilerkanäle durch im Querschnitt gleichartig aufgebaute, jedooh in der Querschnittsgröße kleiner ausgeführte Kanalprofile 1 zu verbinden. Beispielsweise hat das Kanalprofil 1 eine Querschnittsgröße von ca. 100 x 50 mm und das Kanalprofil 1a lediglich eine Querschnittsgröße von ca. 50 x 50 mm. Dementsprechend sind auch die Eckverbinder 63 ausgebildet. Die praktisch lediglich Verbindungsschienen darstellenden Schienen 1a werden dabei nicht zur Stromabnahme, sondern lediglich zur elektrischen Verbindung genutzt.

Es liegt selbstverständlich im Rahmen der Erfindung, an Stelle der kleineren Kanalprofile 1a gleiche Kanalprofile 1 für eine Eckverbindung und für eine Schienensystembildung in waagerechter und senkrechter Richtung einzusetzen, so daß über das gesamte Schienensystem eine Stromabnahme möglich ist. In beiden Fällen sind die Kommunikationskabel 10 ebenfalls von Schiene zu Schiene durch die Eckverbinder 63 verlegt.

Abschließend sei darauf hingewiesen, daß zur Vermeidung von Wiederholungen für die gleichen Bau- und Funktionsteile bei den verschiedenen Ausführungen die gleichen Bezugszahlen verwendet worden sind.

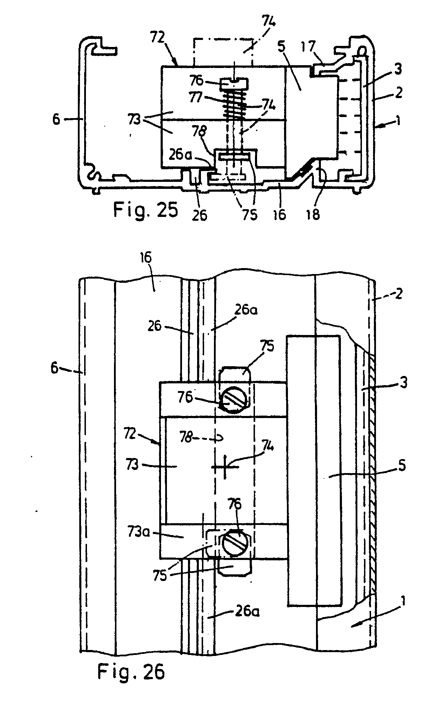

Fig. 25 und 26 zeigen einen innenliegend, im Kanalprofil 1 lösbar festlegbaren Leuchtenfuß 72 in weiterer Ausführung, der sich aus einem zweiteiligen GRundkörper 73, einem daran angeordneten Befestigungsteil 74 für die verschiedenen Leuchtensockel und einem am Grundkörper 73 befestigten Adapter 5 zusammensetzt.

Der in das Kanalprofil 1 eingesetzte Grundkörper 73 stützt sich auf dem Schraubkanal 26 ab und greift mit seinem Adapter 5 zwischen Arretierleiste 17 und Arretiersteg 18, so daß er an deren drei Stellen mechanisch gehalten wird.

Für die Arretierung des Leuchtenfußes 72 ist der Schraubkanal 26 mit einem abgewinkelten, parallel zum U-Steg 16 verlaufenden Haltesteg 26a ausgestattet und im Grundkörper 73 sind zwei Drehbolzen 74 drehbar und axial verschiebbar angeordnet, die an ihrem einen Längenende je einen Verriegelungsfinger 75 in Plattenform haben und am anderen Ende einen Schraubenkopf 76 besitzen. Zwischen Schraubenkopf 76 und einem Grundkörperansatz 73a stütz sich eine um den Drehbolzen 74 angeordnete Druckfeder 77 ab, die den Verriegelungsfinger 75 in eine Aussparung 76 des GRundkörpers 73 hineinzieht, so daß beide Finger 75 innerhalb des Grundkörpers 73 in der Nichtfunktionsstellung gehalten sind.

Der Leuchtenfuß 72 wird durch die offene Kanalprofilseite in das Kanalprofil 1 eingesetzt und auf den Schraubkanal 26 abgesetzt und anschließend seitlich in Richtung Stromverteilerschiene 3 zur mechanischen Verriegelung 5, 17, 18 und elektrischen Verbindung 4, 4a verschoben.

Danach erfolgt auf jeden Drehbolzen 74 durch Ansetzen eines Werkzeuges am Schraubenkopf 76 ein Druck entgegen der Feder 77 und dadurch wird der Drehbolzen 74 axial verschoben, so daß die Verriegelungsfinger 75 aus den Aussparungen 78 heraustreten und bis unter den Haltesteg 28a herausgedrückt werden. Nunmehr werden die Drehbolzen 74 um 90° verdreht, wodurch die Verriegelungsfinger 75 unter dem Haltesteg 26a ebenfalls verdreht werden; (vergleiche strich-punktierte Darstellung). Jetzt kann der Druck auf die Drehbolzen 74 aufgehoben werden und dann ziehen die Druckfedern 77 die Verriegelungsfinger 75 fest unter den Haltesteg 26a.

Dieser Leuchtenfuß 75 ist einfach aufgebaut und hat eine leicht zu handhabende mechanische Verriegelung durch die Dreh-Schnappverschlüsse 74, 75, 77 und ist zur Aufnahme schwerer Bausteine sehr gut geeignet.

Das Kanalprofil 1 zeigt sichtseitig eine ansprechende Oberflächenausführung in Holzfurnier, Farb- oder Kunststoffbeschichtung.

## Patentansprüche

1. Versorgungs- und Verteilerkanal für elektrische Verbraucher- und Kommunikationseinrichtungen, mit einem im Querschnitt U-förmigen Kanalprofil (1) aus Metall, vorzugsweise Leichtmetall, und einer an der offenen Zugangsseite des Kanalprofiles (1) lösbar gehaltenen Abdeckung (12), wobei im Kanalprofil (1) eine aus mehreren elektrischen Leitern (4) gebildete Stromverteilerschiene (3) für die lösbare elektrische Verbindung mit Stromabnehmern (Adaptern) (5) angeordnet und mindestens ein durch ein separates Abdeckprofil (7) gegenüber der Stromverteilerschiene (3) abgeschirmter Kanal (9) für Kommunikationskabel (10) gebildet ist, dadurch gekennzeichnet, daß die Stromverteilerschiene (3) als separates, die elektrischen Leiter (4) beinhaltendes, einstückiges Kunststoffprofil an einem U-Schenkel (2) des Kanalprofiles (1) lagefixiert festgelegt ist und der andere U-Schenkel (6) des Kanalprofiles (1) mit dem Abdeckprofil (7) einen der Stromverteilerschiene (3) gegenüberliegenden, die gesamte U-Schenkelhöhe einnehmenden Kanal (9) für die Kommunikationskabel (10) bildet.

2. Versorgungs- und Verteilerkanal nach Anspruch 1, dadurch gekennzeichnet, daß der Kanal (9) für das Oder die Kommunikationskabel (10) innerhalb und/oder außerhalb des Kanalprofiles (1) liegt.

3. Versorgungs- und Verteilerkanal nach den Ansprüchen 1 und 2, dadurch gekennzeichnet, daß das Kanalprofil (1) an den freien Enden seiner beiden U-Schenkel (2,6) je eine zum Profil-Innenraum hin abgewinkelte und zum gegenüberliegenden U-Schenkel (2,6) zeigende Halteleiste (11) aufweist, hinter denen eine plattenförmige Abdeckung (12) mit Klemmleisten (13) unter Rastverbindung lösbar gehalten ist (Fig. 1 und 2).

4. Versorgungs- und Verteilerkanal nach Anspruch 1, dadurch gekennzeichnet, daß das innenseitig am Kanalprofil-U-Schenkel (2) anliegende Kunststoffprofil (3a) der Stromverteilerschiene (3) einen U-förmigen Querschnitt mit am U-Steg angeformten Aufnahmeprofilen (3b) für je einen elektrischen Leiter (4) aufweist und mit einem U-Schenkel (3c) in einer Nut (14) zwischen Kanalprofil-U-Schenkel (2) und Halteleiste (11) und mit dem anderen U-Schenkel (3d) hinter einer an diesen U-Schenkel (3d) ausrollbaren, im Querschnitt winkelförmigen und vorzugsweise verzahnten Halteleiste (15) des Kanalprofil-U-Steges (16) lagefixiert im Kanalprofil (1) gehalten ist (Fig. 1 und 2).

5. Versorgungs- und Verteilerkanal nach den Ansprüchen 1 und 3, dadurch gekennzeichnet, daß sich an die Halteleiste (11) des Kanalprofil-U-Schenkels (2) eine mit diesem U-Schenkel (2) die Nut (14) für das Kunststoffprofil (3a) bildende, im Querschnitt stumpfwinklige und in den Kanalprofil-Innenraum hineinragende Arretierleiste (17) anschließt und der Kanalprofil-U-Steg (16) einen winklig dazu stehenden und zur Arretierleiste (17) zeigenden Arretiersteg (18) besitzt und der Stromabnehmer (5) mit endseitigen federnden Haltern (19) zwischen der Arretierleiste (17) und dem Arretiersteg (18) mechanisch verriegelt und lösbar gehalten ist (Fig. 1 und 2).

6. Versorgungs- und Verteilerkanal nach den Ansprüchen 1 und 5, dadurch gekennzeichnet, daß der Kanalprofil-U-Steg (16) eine angeformte und schräg zum Arretiersteg (18) verlaufende Aufnahmeleiste (20) besitzt, in der ein Erdleiter (21) lagert, mit dem der Stromabnehmer (5) mit einem Erdleiter (22) kontaktierbar ist (Fig. 1 und 2).

7. Versorgungs- und Verteilerkanal nach den Ansprüchen 1 bis 3, dadurch gekennzeichnet, daß die am Kanalprofil-U-Schenkel (6) angeformte Halteleiste (11) eine zum U-Schenkel (6) hin gerichtete Arretierkante (23) und der Kanalprofil-U-Steg (16) eine angeformte Arretiernase (24) aufweist und das Abdeckprofil (7) mit an seinen beiden Längsrändern angeformten Klemmleisten (25) hinter die Arretierkante (23) und -nase (24) unter Rastverbindung lösbar gehalten ist (Fig. 2).

8. Versorgungs- und Verteilerkanal nach den Ansprüchen 1 und 7, dadurch gekennzeichnet, daß das Abdeckprofil (7) von einer im Querschnitt stumpfwinkligen Platte gebildet ist, die am parallel zum Kanalprofil-U-Schenkel (6) verlaufenden Plattenteil eine gabelartige, die Arretiernase (24) über- und untergreifende Klemmleiste (25) und am abgewinkelten Plattenteil eine hinter die Arretierkante (23) fassende, hakenartige Klemmleiste (25) aufweist (Fig. 1).

9. Versorgungs- und Verteilerkanal nach den Ansprüchen 1 bis 8, dadurch gekennzeichnet, daß am Kanalprofil-U-Steg (16) und an der plattenförmigen Abdeckung (12) je ein Schraubkanal (26) angeformt ist, an denen elektrische Bauelemente und/oder zwischen denen durch Schrauben (27) eine flexible Erdungsleitung (28) festlegbar sind (ist) (Fig. 1 und 2).

10. Versorgungs- und Verteilerkanal nach den Ansprüchen 1 bis 9, dadurch gekennzeichnet, daß in das Kanalprofil (1) ein zweites, im Querschnitt kleineres und zwischen dem Kanal (9) und dem eingesetzten Stromabnehmer (5) liegendes Kanalprofil (29) mit Stromverteilerschiene (3) eingesetzt ist, welches an seiner offenen Profilseite nach außen gerichtete und an den Halteleisten (11) lösbar verrastende Befestigungsleisten (30) aufweist und durch eine zwischen den Befestigungsleisten (30) lösbar einrastende, plattenförmige Abdeckung (12a) verschließbar ist (Fig. 4).

11. Versorgungs- und Verteilerkanal nach Anspruch 10, dadurch gekennzeichnet, daß die Stromverteilerschiene (3) des zweiten Kanalprofiles (29) parallel zum U-Steg (16) des größeren Kanalprofiles (1) angeordnet ist (Fig. 4).

12. Versorgungs- und Verteilerkanal nach den Ansprüchen 10 und 11, dadurch gekennzeichnet, daß an dem den Kanal (9) aufweisenden Kanalprofil-U-Schenkel (6) außenseitig ein zweites, im Querschnitt U-förmiges und an der offenen Querschnittsseite durch eine verrastbare Abdeckung (12a) verschließbares Kanalprofil (8) durch Schrauben od. dgl. befestigt ist, welches einen zweiten Kanal (9) für Kommunikationskabel (10) bildet (Fig. 4).

13. Versorgungs- und Verteilerkanal nach den Ansprüchen 1 und 2, dadurch gekennzeichnet, daß an einem eine Stromverteilerschiene (3) aufnehmenden Kanalprofil (1) zur Bildung eines Kanales (9) für Kommunikationskabel (10) ein zweites Kanalprofil (8) angeordnet ist, welches mit seiner offenen Kanalseite an am Kanalprofil-U-Steg (16) nach außen angeformten Halteleisten (31) unter Steck- und Rastverbindung lösbar gehalten ist (Fig. 5).

14. Versorgungs- und Verteilerkanal nach den Ansprüchen 1 und 2, gekennzeichnet durch ein leistenförmiges, innenseitig an dem Kanalprofil-U-Schenkel (6) lagefixiert anliegendes Halteprofil (32) aus Kunststoff mit mehreren an der dem U-Schenkel (6) abgewandten Halteprofilseite angeformten, rinnenförmigen Haltern (7a) mit unterschiedlichen Querschnittsgrößen, welche jeweils einen Kanal (9) bilden und je ein Kommunikationskabel (10) lagegesichert und abgeschirmt aufnehmen (Fig. 3a).

15. Versorgungs- und Verteilerkanal nach Anspruch 14, dadurch gekennzeichnet, daß an dem freien Ende jedes U-Schenkels (2,6) des Kanalprofiles (1) eine zum U-Steg (16) und zur Kanalprofil-Querschnittsbreitenhalbierenden hin gerichtete, mit dem zugeordneten U-Schenkel (2,6) eine Aufnahmenut bildende Abwinklung (33) und auf dem U-Steg (16) ein mit dem benachbarten U-Schenkel (2,6) eine zweite Aufnahmenut bildender Haltesteg (15a) angeformt sind und in den beiden sich gegenüberliegenden Aufnahmenuten einerseits die Stromverteilerschiene (3) und andererseits das Halteprofil (32) formschlüssig eingeschoben lagern und durch eine an der Abwinklung (33) vorgesehene Verzahnung (34) lagefixiert sind (Fig. 3a).

16. Versorgungs- und Verteilerkanal nach Anspruch 15, dadurch gekennzeichnet, daß die Stromverteilerschiene (3) mit einem im Querschnitt winkelförmigen Arretieransatz (35) ausgestattet und der U-Steg (16) mit einem angeformten, in das Kanalprofil (1) hineinragenden Arretiersteg (18) versehen ist, welche den mit der Stromverteilerschiene (3) elektrisch kontaktierenden Stromabnehmer (5) lagefixiert und lösbar halten (Fig. 3a).

17. Versorgungs- und Verteilerkanal nach den Ansprüchen 1 bis 8 und 10 bis 16, dadurch gekennzeichnet, daß die Abdeckung (12) innenseitig einen angeformten Haltesteg (36) aufweist, an dem eine mit dem Erdleiter (21) des Kanalprofiles (1) in der geschlossenen Abdeckstellung kontaktierende Erdungsfahne (37) festgelegt ist (Fig. 3a).

18. Versorgungs- und Verteilerkanal nach einem oder mehreren der vorhergehenden Ansprüche 1 bis 17, dadurch gekennzeichnet, daß an dem Schraubkanal (26) des Kanalprofiles (1) eine innen-oder außenliegende Leuchtstoffröhrenleuchte (38) durch Schrauben od. dgl. befestigt und diese Leuchte (38) durch eine gewölbte und/oder ebene, durchsichtige oder durchscheinende, an den Halteleisten (11) verrastete Abdeckung (39) abgedeckt ist (Fig. 3).

19. Versorgungs- und Verteilerkanal nach den Ansprüchen 1 bis 17, dadurch gekennzeichnet, daß in der Abdeckung (12) ein oder mehrere Ausschnitte (40) ausgespart sind, in deren Bereich unter der Abdeckung (12) eine Gerätedose (41) für Steckdosen, Schalter od. dgl. durch Schrauben (42) od. dgl. befestigt ist (Fig. 11 bis 14).

20. Versorgungs- und Verteilerkanal nach Anspruch 1, dadurch gekennzeichnet, daß der Stromabnehmer (5) in einem zweigeteilten Gehäuse - Gehäuseunterteil (43) und Deckel (44) in einem Isolierteil (45) mehrere, vorzugsweise fünf elektrische Leiter (4a)- vier Phasen und einen plattenförmigen und zwei Kontaktpunkte (22a) aufweisenden Nulleiter - sowie den Erdleiter (22) aufweist und an seinen beiden Längenenden jeweils zwei hinter die Arretierstege (17,18) des Kanalprofiles (1) greifende Halter (19) mit sich daran anschließenden, federnd mit den Haltern (19) ausgebildeten Löseschenkeln (46) ausgestattet ist (Fig. 6 bis 10).

21. Versorgungs- und Verteilerkanal nach den Ansprüchen 1 bis 20, gekennzeichnet durch einen am Kanalprofil (1) außenseitig lösbar festlegbaren, mit einem Stromabnehmer (5) ausgestatteten Leuchtensockel (47) für eine Wand-, Hänge- oder Standleuchte (48), der durch Steck- und Klemm-Schraubmittel (49, 49a, 50) lösbar an der offenen Kanalprofilseite - den Halteleisten (11) - festlegbar ist (Fig. 15, 16).

22. Versorgungs- und Verteilerkanal nach den Ansprüchen 1 bis 20, gekennzeichnet durch einen innenliegend im Kanalprofil (1) lösbar festlegbaren Leuchtenfuß (51), der sich aus einem Basisteil (52) mit Stromabnehmer (5) und auswechselbarer Aufnahmeplatte (53) für Leuchtensockel und einem mittels Schraube (57) zwischen den Arretieransätzen (17,18) und U-Schenkel (6) des Kanalprofiles (1) verspannbaren Klemmkeil (54) zusammensetzt (Fig. 21 und 22).

23. Versorgungs- und Verteilerkanal nach Anspruch 22, dadurch gekennzeichnet, daß der Klemmkeil (54) durch Nut-Feder-Verbindung (55,56) verschiebegeführt mit dem Basisteil (52) und durch die in das Basisteil (52) eingreifende und mit einem Mitnehmer (57a) in den Klemmkeil (54) einfassende Schraube (57) form- und kraftschlüssig verbunden ist (Fig. 21 und 22).

24. Versorgungs- und Verteilerkanal nach den Ansprüchen 22 und 23, dadurch gekennzeichnet, daß der Klemmkeil (54) einen dem Kanalprofil-U-Schenkel (6) benachbarten, abgeschirmten Kanal (9) für Kommunikationskabel (10) aufweist (Fig. 21 und 22).

25. Versorgungs- und Verteilerkanal nach den Ansprüchen 1 bis 24, gekennzeichnet durch eine die Stirnenden des Kanalprofiles (1) abschließende Endkappe (58) aus Kunststoff, die das Kanalprofilende formschlüssig überfaßt und durch Schrauben (59) od. dgl., welche in diagonal sich gegenüberliegend in den U-Schenkel-Eck- bzw. Freiendseiten eingeformte Schraublöcher (60) des Kanalprofiles (1) eingreifen, lösbar am Kanalprofil (1) gehalten sind (Fig. 1, 17, 19).

26. Versorgungs- und Verteilerkanal nach den Ansprüchen 1 bis 25, gekennzeichnet durch einen Kanalprofil-Längsverbinder (61) aus Kunststoff, der U-förmig ausgebildet ist, zwei benachbarte Kanalprofile (1) von deren offenen Kanalseite her dreiseitig formschlüssig übergreift, an seinen beiden U-Schenkeln je eine Trennwandung (62) hat und durch Steckverbindung lösbar zwischen den mit Abstand zueinander verlaufenden Stirnenden zweier Kanalprofile (1) gehalten ist (Fig. 17, 18).

27. Versorgungs- und Verteilerkanal nach den Ansprüchen 1 bis 26, gekennzeichnet durch einenwinklig zueinander verlaufende Kanalprofile (1) verbindenden Eckverbinder (63) aus Kunststoff als Innen- oder Außenecke, mit einem U-förmigen Querschnitt mit nach innen- oder außen gewölbtem Steg (64) und U-Schenkeln (65) und sich innenseitig an dem Steg (64) und U-Schenkeln (65) anschließenden Trennwandungen (66) (Fig. 20).

28. Versorgungs- und Verteilerkanal nach den Ansprüchen 25 bis 27, dadurch gekennzeichnet, daß der Längs- und Eckverbinder (16, 63) und die Endkappe (58) im Stoßbereich zwischen Abdeckung (12) und U-Schenkeln (2,6) - Halteleisten (11) - jeweils eine Nut (67) als durchgehende Stoßkante aufweisen (Fig. 17 bis 19).

29. Versorgungs- und Verteilerkanal nach den Ansprüchen 1 bis 20 und 25 bis 28, gekennzeichnet durch einen innenliegend im Kanalprofil (1) lösbar festlegbaren Leuchtenfuß (72), der sich aus einem auf dem Schraubkanal (26) abstützenden Grundkörper (73) mit Befestigungsteil (74) für einen Leuchtensockel und einem am Grundkörper (73) festgelegten, an den Arretierteilen /17, 18) des Kanalprofiles (1) abstützenden Adapter (5) zusammensetzt und durch Dreh-Schnappverschlüsse (74, 75, 77) hinter einem am Schraubkanal (26) abgewinkelten Haltesteg (26a) arretierbar ist.

30. Versorgungs- und Verteilerkanal nach Anspruch 29, dadurch gekennzeichnet, daß im Grundkörper (73) zwei axial verschiebbare Drehbolzen (74) mit jeweils an einem Bolzenende angebrachtem Verriegelungsfinger (75) und am anderen Bolzenende vorgesehenem Schraubenkopf (76) drehbar gelagert sind, die ihren in einer Aussparung (78) des Grundkörpers (73) in der Nichtfunktionsstellung gehaltenen Verriegelungsfinger (75) entgegen einer Federkraft (77) aus dem Grundkörper (73) heraus verschiebbar und um 90° verdrehbar und hinter dem Haltesteg (26a) unter Federspannung verriegelbar halten.

## Claims

1. Supply and distribution duct for electrical consumption and communications installations, with a U-shaped duct profile (1) in section, made of metal, preferably light-weight metal, and a removable cover (12) held on the open access side of the duct profile (1), whereby in the duct profile (1) a power distribution rail (3) comprising several electrical leads (4) is accommodated for a disconnectable electrical connection with power outlets (adapters) (5) and at least one duct (9) is formed for communications cabling (10), shielded from the power distribution rail (3) by a separate cover profile (7), characterised by the fact that the power distribution rail (3) is fixed in a set position as a separate single-piece plastic profile containing the electrical leads (4) to a U-piece (2) of the duct profile (1) and the other U-piece (6) of the duct profile (1) together with the cover profile (7), forms a duct (9), opposite the power distribution rail (3) and taking up the whole of the height of the U-piece, for the communications cabling (10).

2. Supply and distribution duct as per claim 1 characterised by the fact that the duct (9) for the communications cable or cables (10) lies within and/or outside the duct profile (1).

3. Supply and distribution duct as per claims 1 and 2, characterised by the fact that the duct profile (1) displays at the free ends of its two U-pieces (2, 6) support strips (11) which are angled towards the inside of the profile and point towards the opposite U-piece, behind which a plate-shaped cover (12) is held, disconnectably, by fixing strips (13) in a catch connection (Figs. 1 and 2).

4. Supply and distribution duct as per claim 1, characterised by the fact that the plastic profile (3a) of the power distribution rail (3) adhering to the inside of the duct-profile U-piece (2) displays a U-shaped cross-section with holding profiles (3b) formed on the U-plate for one electrical lead (4) each and is held with a U-piece (3c) in a groove (14) between the duct profile Upiece (2) and the support strip (11) and with the other U-piece (3d) is held in a fixed position in the duct profile (1) behind a support strip (15) of the duct profile U-plate (16) which can be rolled out on this U-piece (3d), forms an angle in its cross-section and is preferably toothed. (Figs. 1 and 2).

5. Supply and distribution duct as per claims 1 and 3, characterised by the fact that the support strip (11) of the duct profile U-piece (2) connects with a stop strip (17) which, together with this U-piece (2) forms the groove (14) for the plastic profile (3a), the aforesaid strip having an obtuse-angled cross-section and projecting out into the hollow of the duct profile, and the duct profile U-plate (16) has a stop plate (18) at an angle to this and pointing towards the stop strip (17) and the stop plate (18) is locked mechanically and is disconnectable (Figs. 1 and 2).

6. Supply and distribution duct as per claims 1 and 5, characterised by the fact that the duct profile U-plate (16) has a holding strip (20) moulded on to and running at an angle to, the stop plate (18), in which an earthing lead is located, by which the power outlet (5) can be earthed (Figs. 1 and 2).

7. Supply and distribution duct as per claims 1 to 3, characterised by the fact that the support strip (11) moulded to the duct profile U-piece (6) displays a stop edge (23) directed towards the U-piece (6) and the duct profile U-piece (16) displays a moulded stop-lug (24) and the cover profile (7) is held with fixing strips moulded to its two long edges behind the stop edge (23) and lug (24) underneath the catch connection, so that it can be disconnected (Fig. 2).

8. Supply and distribution duct as per claims 1 and 7, characterised by the fact that the cover profile (7) is formed by a plate with an obtuse-angled section, which displays, on the part of the plate running parallel with the duct profile U-piece (6), a fork-shaped fixing strip (25) gripping under and over the stop lug (24) and, on the angled part of the plate, a hook-shaped fixing strip (25) which reaches behind the stop edge (23) (Fig. 1).

9. Supply and distribution duct as per claims 1 to 8, characterised by the fact that on both the duct profile U-piece (16) and on the plate-shaped cover (12) there is a screw-duct (26) to which electrical components can be fixed and/or between which a flexible earthing lead (28) can be fixed with screws (27) (Figs. 1 and 2).

10. Supply and distribution duct as per claims 1 to 9, characterised by the fact that in the duct profile (1) a second duct profile (29) , smaller in section and lying between the duct (9) and the power outlet used (5), is inserted with a power distribution rail (3) , which, on its open profile side, has fixing strips (30) facing outwards and locking into the fixing strips (30) but disconnectable and which can be locked by means of a plate-shaped cover (12a) fitting between the fixing strips (30) and disconnectable.

11. Supply and distribution duct as per claim 10, characterised by the fact that the power distribution rail (3) of the second duct profile (29) is arranged parallel to the U-plate (16) of the larger duct profile (1) (Fig. 4).

12. Supply and distribution duct as per claims 10 and 11, characterised by the fact that on the outside of the duct profile U-piece (6) indicating the duct (9) a second duct profile (8), with a U-shaped section and locking on the open cross section side by means of an interlocking cover (12a) is fixed by means of screws or similar, which forms a second duct (9) for communications cabling (10). (Fig. 4)

13. Supply and distribution duct as per claims 1 and 2, characterised by the fact that on one duct profile (1) accommodating a power distribution rail (3) a second duct profile (8) is designed to form a duct for communications cables (10), which is held by its open duct side on support strips (31) moulded outwards on the duct profile U-plate (16) with a plug-in and interlock connection which can be disconnected (Fig. 5).

14. Supply and distribution duct as per claims 1 and 2, characterised by a strip-shaped contoured support profile (32) made of plastic, fixed in position inside the duct profile U-piece (6), with several channel-like mounts (7a) on the side of the support profile turned away from the U-piece (6), with different sized cross sections, which each form a duct (9) and each accommodate one communications cable (10) in a secure position and screened. (Fig. 3a).

15. Supply and distribution duct as per claim 14, characterised by the fact that on the free end of each U-piece (2, 6) of the duct profile (1) an angle (33) forming a housing groove towards the U-plate (16) and the duct profile width axis is formed and on the U-plate (16) a support plate (15a) forming a second housing groove with the adjacent U-piece (2, 6) is formed, and in both housing grooves, opposite each other, on the one hand the power distribution rail (3) and on the other the support profile (32) are inserted to form a flush surface and they are fixed in position by means of a toothed unit (34) on the angle (33) (Fig. 3a).

16. Supply and distribution duct as per claim 15, characterised by the fact that the power distribution rail (3) is fitted with a stop (35) which has an angled cross section and the U-plate has a moulded stop plate (18) projecting into the duct profile (1), which hold the power outlet (5), with a live contact with the power distribution rail (3) fixed in position yet disconnectable (Fig. 3a).

17. Supply and distribution duct as per claims 1 to 8 and 10 to 16, characterised by the fact that the cover (12) displays a moulded support plate (36) on the inside, on which an earthing lug (37), in contact with the earth lead (21) of the duct profile (1) when in the closed cover position, is fixed (Fig. 3a).

18. Supply and distribution duct as per one or more of claims 1 to 17, characterised by the fact that on the screw duct (26) of the duct profile (1) an internal or external fluorescent light (38) is fixed by means of screws or similar and this light (38) is covered by a domed and/or flat, transparent or opaque, cover (39), interlocking with the support strips (1) (Fig. 3).

19. Supply and distribution duct as per claims 1 to 17, characterised by the fact that in the cover (12) one or more openings (40) have been cut out, in which area an appliance box (41) for plugs, switches or similar, is fixed under the cover (12) by means of screws (42) or similar (Figs. 11 to 14).

20. Supply and distribution duct as per claim 1, characterised by the fact that the power outlet (5), in a two-part housing - housing bottom (43) and cover (44) in an insulating section (45), displays several, preferably five, electrical leads (4a) - four phases and one plate-shaped neutral conductor with two contact points (22a) - together with the earth (22) and is fitted on both its long ends with two brackets (19) gripping behind the stop plates (17, 18) of the duct profile (1) with connecting disconnectors (46) formed in a sprung design with the brackets (19) (Figs. 6 to 10).

21. Supply and distribution duct as per claims 1 to 20, characterised by a lighting base (47), which can be detachably fixed to the outside of the duct profile (1), fitted with a power outlet (5), for a wall-mounted, suspended or standing lamp (48), which can be fixed to the open duct profile side - the support strips (11) by means of plug and clamp screw fixings (49, 49a, 50) (Figs. 15, 16).

22. Supply and distribution duct as per claims 1 to 20, characterised by a lighting foot (51) which can be detachably fixed inside the duct profile (1), and which comprises a base part (52) with power outlet (5) and a replaceable housing plate (53) for the light base and a fixing wedge (54) which can be fixed with a screw (57) in between the stops (17, 18) and the U-piece (6) of the duct profile (1) (Figs. 21 and 22).

23. Supply and distribution duct as per claim 22, characterised by the fact that the fixing wedge (54) is connected to slide, by means of a groove-spring connection (55, 56), with the base section (52) and by means of the screw (57) which grips into the base section (52) and into the wedge (54) with a driver (57a) to form a single unit in terms of shape and force (Figs. 21 and 22).

24. Supply and distribution duct as per claims 22 and 23, characterised by the fact that the clamping wedge (54) displays a shielded duct (9) for communications cables (10) , close to the U-piece of the duct profile (6) (Figs. 21 and 22).

25. Supply and distribution duct as per claims 1 to 24, characterised by an end cap (58) made of plastic sealing the top end of the duct profile (1), which covers the end of the duct profile and lies flush with it and is held detachably in place by screws (59) or similar, which grip in the screw holes (60) of the duct profile (1) formed to lie diagonally opposite each other in the U-piece-corner or free end sides. (Figs. 1, 17, 19).

26. Supply and distribution duct as per claims 1 to 25, characterised by a longitudinal duct profile joint (61) made of plastic, in a U-shape, which clasps two adjacent duct profiles (1) from their open duct side in a flush three-sided fixing, on whose two U-pieces there are partitions (62) and which is detachably held by means of a plug connection between the top ends of two spaced out duct profiles (1) (Figs. 17, 18).

27. Supply and distribution duct as per claims 1 to 26, characterised by a corner joint (63) connecting duct profiles (1) running at angles to each other and made of plastic, as an internal or external corner, with a U-shaped section with a plate domed inwards or outwards (64) and U-pieces (65) and partitions (66) connecting to the plate (64) and the U-pieces (65) on the inside (Fig. 20).

28. Supply and distribution duct as per claims 25 to 27, characterised by the fact that the longitudinal and corner joints (16, 63) and the end cap (58) each have a groove (67) as a continuous join edge in the junction area between the

13

cover (12) and the U-pieces (2, 6) - support strips (1) - (Figs. 17 to 19).

29. Supply and distribution duct as per claims 1 to 20 and 25 to 28, characterised by a lighting foot (72) which can be detachably fixed inside the duct profile (1) , composed of a basic body (73) supported on the screw duct (26) with a fixing section (74) for a lighting base and an adapter (5) fixed on the basic body (73) and supported on the stop sections (17, 18) of the duct profile (1) and which can be stopped by means of swivel snap locks (74, 75, 77) behind a support plate (26a) set at an angle to the screw duct (26).

30. Supply and distribution duct as per claim 29, characterised by the fact that in the basic body (73) two axially sliding pivot pins (74), each with a locking tip (75) on one end and on the other a screw head (76), are swivel-mounted, and these hold their locking tips (75) in an opening (78) in the basic body (73) in the idle position against a spring force (77) from the basic body (73) in such a way that they can be displaced and turned through 90° and are held behind the support plate (26a) by a spring-load where they can be locked into place.

**Revendications**

1. Canalisation de service et de distribution, notamment pour consommateurs d'électricité et dispositifs de communication, avec un profilé de canalisation (1) à section transversale en forme de "U", en métal, de préférence en métal léger, et une chape (12), maintenue, de façon amovible, du côté d'accès du profilé de canalisation (1), une barre omnibus de distribution de courant (3), formée de plusieurs conducteurs électriques (4) , étant disposée dans le profilé de canalisation (1), pour le raccordement électrique, amovible de récepteurs de récepteurs de courant (adapteurs) (5) et au moins une canalisation (9) pour câble de communication (10), protégée, par rapport à la barre omnibus de distri-bution de courant (3), par un profilé de blindage (7) séparé, caractérisée par le fait que la barre omnibus de distri-bution de courant (3), en tant que profilé individuel, en matière plastique, fait d'une seule pièce contenant les conducteurs électriques (4), est fixée, positionnée correctement, à un jambage du "U" (2) du profilé de canalisation (1), tandis que l'autre jambage du "U" (6) du profilé de canalisation (1) forme, avec le profilé de blindage (7) un canal (9) pour câble de communication (10) situé vis-à-vis de la barre omnibus de distribution de courant (3) et occupant la hauteur totale jambage du "U" (6).

2. Canalisation de service et de distribution selon revendication 1, caractérisée par le fait que le canal (9) pour le ou les câble/s de communication (10) est situé à l'intérieur et/ou à l'extérieur du profilé de canalisation (1).

3. Canalisation de service et de distribution selon les revendications 1 et 2, caractérisée par le fait que le profilé de canalisation (1) présente, à chaque extrémité libre de ses deux jambages (2, 6), une barre de retenue (11) pliée angulairement vers l'intérieur du profilé et dirigée, vers le jambage du "U" (2, 6) opposé, une chape (12) en forme de plaque étant maintenue, de façon amovible, derrière ces barre de retenue (11), avec des baguettes de serrage (13) sous crantage (fig. 1 et 2).

4. Canalisation de service et de distribution selon revendication 1, caractérisée par le fait que le profilé en matière plastique (3a) de la barre omnibus de distribution de courant (3), contigu, côté interne, au jambage du "U" (2) du profilé de canalisation (1) présente une section transversale en "U" avec des profilés de logement (3b), qui, formés à partir du dos du "U" (16), faisant corps avec lui, accueillent, chacun, un conducteur électrique (4) et est maintenu, avec un jambage du "U" (3c), dans une encoche (14), entre le jambage du "U" (2) et la barre de retenue (11), et positionné correctement dans le profilé de canalisation (1) , avec l'autre jambage du "U" (3d), derrière une barre de retenue (15) à section angulaire et de préférence endentée, déroulable sur ce jambage du "U" (3d) (fig. 1 et 2)

5. Canalisation de service et de distribution selon les revendications 1 et 3, caractérisée par le fait que la barre de retenue (11) du jambage du "U" (2) est prolongé par une baguette d'arrêt (17), qui, faisant saillie à l'intérieur du profilé de canalisation (1), forme, avec le jambage du "U" (2), l'encoche (14) pour le profilé en matière plastique (3a) et présente une section transversale à angle obtus, et que dos du "U" (16) est équipé d'un pont d'arrêt (18), formant un angle avec lui et dirigé vers la baguette d'arrêt (17), et que le récepteur de courant (5) est maintenu, de façon amovible, entre la baguette d'arrêt (17) et le pont d'arrêt (18), avec des appuis (19), étant verrouillé mécaniquement (fig. 1 et 2).

6. Canalisation de service et de distribution selon les revendications 1 et 5, caractérisée par le fait que le dos du "U" (16) du profilé de canalisation (1) possède une barre de réception (20), formée à partir de lui et faisant corps avec lui et qui, s'étendant en biais vers le pont d'arrêt (18), abrite une mise à la terre (21),), à l'aide de laquelle le récepteur de courant (5) est contactable avec une mise à la terre (22) fig. 1 et 2).

7. Canalisation de service et de distribution selon les revendications 1 et 3, caractérisée par le fait que la barre de retenue (11), formée d'une seule pièce à partir du jambage du "U" (6), faisant corps avec lui, Présente un bord d'arrêt (23), dirigée vers le jambage du "U" (6) et que le dos du "U" (16) du Profilé de canalisation est équipé d'un mentonnet d'arrêt (24) faisant corps avec lui, et que le profilé de blindage (7) est maintenu, de façon amovible, derrière le bord d'arrêt (23) et le mentonnet d'arrêt (24), par crantage, à l'aide de barres de blocage (25), formées à partir de ses deux bords longitudinaux , faisant corps avec eux (fig. 2).

8. Canalisation de service et de distribution selon les revendications 1 et 7, caractérisée par le fait que le profilé de blindage (7) consiste en une plaque de section transversale à angle obtus, la partie de cette plaque Parallèle au jambage du "U" (6) étant pourvue d'une barre de blocage (25) en forme de fourche qui saisit le mentonnet d'arrêt (24), par dessus et par dessous, , tandis que la partie de la plaque pliée angulairement présente une barre de blocage (25) en forme de crochet, s'engageant derrière le bord d'arrêt (23) (fig. 1).

9. Canalisation de service et de distribution selon les revendications 1 à 8, caractérisée par le fait que le dos du "U" (16) et la chape (12) sont équipés respectivement d'un canal à vis (26) formant corps avec eux, des éléments de construction électriques et/ou une mise à la terre flexible (28) pouvant y être fixés à l'aide de vis (fig. 1 et 2).

10. Canalisation de service et de distribution selon les revendications 1 à 9, caractérisée par le fait qu'un second Profilé de canalisation (29), de section transversale plus petite, est installé, dans le profilé de canalisation (1), avec la barre omnibus de distribution de courant (3), entre le canal (9) et le récepteur de courant (5) mis en place, lequel profilé de canalisation (29) présente, de son côté ouvert, des barres de fixation (30) dirigées vers l'extérieur et s'enclenchant, de façon amovible, avec les barre de retenue (11), et Peut être fermé avec une chape (12a) en forme de plaque s'encastrant, de façon amovible, entre les barres de fixation (30) (fig. 4).

11. Canalisation de service et de distribution selon revendication 10, caractérisée par le fait que la barre omnibus de distribution de courant (3) du second profilé de canalisation (29) est disposée parallèlement au dos du "U" (16) du grand profilé de canalisation (1) (fig. 4).

12. Canalisation de service et de distribution selon les revendications 10 et 11, caractérisée par le fait qu'un second profilé de canalisation (8) à section transversale en "U", pouvant être fermé, du côté transversal avec une chape enclenchable (12a), est fixé, vers l'extérieur, à l'aide de vis ou analogue, au jambage du "U" (6) équipé du canal (9), lequel profilé de canalisation (8) forme un second canal (9) pour câble de communication (10) (fig. 4).

13. Canalisation de service et de distribution selon les revendications 1 et 2, caractérisée par le fait qu'un second profilé de canalisation (8) est installé sur un profilé de canalisation (1) accueillant une barre omnibus de distribution de courant (3) en vue de former un canal (9) pour câble de communication (10), lequel profilé de canalisation (8) est maintenu, de façon amovible, de son côté canal ouvert, par enfichage et crantage, à des barres de retenue (31), formées, vers l'extérieur, à partir du dos du "U" (16), formant corps avec lui (fig. 5).

14. Canalisation de service et de distribution selon les revendications 1 et 2, caractérisée par un profil de maintien (32) en matière plastique, en forme de baguette, positionné à l'intérieur du jambage du "U" (6), contigu à celui-ci, et équipé de plusieurs supports (7a) de sections transversales différentes, formés à partir de la face du profil de maintien opposée au jambage du "U" et faisant corps avec elle, lesquels forment chacun un canal (9) et reçoivent chacun un câble de communication (10) ainsi protégé et dont le positionnement correct est assuré (fig. 3a).

15. Canalisation de service et de distribution selon revendication 14, caractérisée par le fait qu'à l'extrémité libre de chaque jambage du "U" (2, 6) du profilé de canalisation (1) une pliure (33), dirigée vers le dos de l'"U" (16) et la bissectrice de largeur transversale du profilé de canalisation et formant une encoche de réception avec le jambage de l'"U" (2, 6) correspondant, est formée d'une pièce à partir de l'extrémité libre de chaque jambage de l'"U" (2, 6) du profilé de canalisation (1), et qu'un pont d'arrêt (15a) est formé sur le dos de l'"U" (16), formant, avec le jambage de l'"U" (2, 6) voisin, une seconde encoche de réception, et que la barre omnibus de distribution de courant (3), d'une part, et le profilé de retenue (32), d'autre part, sont introduits dans les deux encoches de réception se faisant face, dont ils épousent les contours en s'engageant positivement et sont maintenus positionnés par une denture (34) prévue dans la pliure (33) (fig. 3a).

16. Canalisation de service et de distribution selon revendication 15, caractérisée par le fait que la barre omnibus de distribution de courant (3) est équipée d'un épaulement d'arrêt (35) à section transversale angulaire et le dos de l'"U" (16) d'un pont d'arrêt (18), formé d'un pièce et faisant corps avec lui, en saillie dans le profilé de canalisation (1), lesquels maintiennent, amoviblement, le récepteur de courant (5) en contact électrique avec la barre omnibus de distribution de courant (3), le fixant dans la position voulue (fig. 3a).

17. Canalisation de service et de distribution selon les revendications 1 à 8 et 10 à 16, caractérisée par le fait que la chape (12) présente, sur sa face interne, un pont d'arrêt (36), auquel un drapeau de mise à la terre (37) contactant la mise à la terre (21) du profilé de canalisation (1) est fixé (fig. 3a).

18. Canalisation de service et de distribution selon une ou plusieurs revendications 1 à 17, caractérisée par le fait qu'un tube fluorescent (38) interne ou externe est fixée, à l'aide de vis ou analogue, au canal à vis (26) du profilé de canalisation (1) et que tube fluorescent (38) est recouverte par une chape (39) voûtée et/ou plane, transparente ou translucide, encastrée dans les barre de retenue (11) (fig. 3).

19. Canalisation de service et de distribution selon les revendications 1 à 17, caractérisée par le fait qu'une ou plusieurs découpes (40) sont pratiquées dans la chape (12), dans le secteur desquelles une boîte à appareils (41) pour prises de courant ou commutateurs etc. est fixée à l'aide de vis (42) ou analogue, sous la chape (12) (fig. 11 à 14).

20. Canalisation de service et de distribution selon revendication 1, caractérisée par le fait que le récepteur de courant (5) présente, dans un boitier divisé en deux - partie inférieure du boîtier (43) et couvercle (44) -, dans une partie isolée (45), plusieurs , de préférence cinq, conducteurs électriques (4a) - quatre Phases et un neutre en forme de plaque présentant deux Points de contact (22a) -, ainsi que le neutre (22) et est équipé, à chacune de ses deux extrémités longitudinales de deux supports (19) prenant derrière les baguettes d'arrêt (17, 18) du profilé de canalisation (1), avec branches de déclenchement (46) les prolongeant et faisant ressort (fig. 6 à 10).

21. Canalisation de service et de distribution selon les revendications 1 à 20, caractérisée par un socle de lampe (47) pour applique murale, suspension ou lampe à pied équipé d'un récepteur de courant (5) et fixable, extérieurement, de façon amovible, au Profilé de canalisation (1), lequel socle de lampe (47) est fixable, de façon amovible, au côté ouvert du profilé de canalisation, à l'aide de fiches, de dispositif de serrage ou de vis (49, 49a, 50) (fig. 15, 16).

22. Canalisation de service et de distribution selon les revendications 1 à 20, caractérisée par un pied de lampe (51), fixé de façon amovible, à l'intérieur du profilé de canalisation (1), lequel est composé d'une base (52) avec récepteur de courant (5) et plaque de réception (53) interchangeable pour socle de lampe, et d'une pièce de serrage (54), tendue, à l'aide d'une vis (57), entre les baguette d'arrêt (17, 18) et le jambage de l'"U" (6)) du profilé de canalisation (1) (fig. 21 et 22).

23. Canalisation de service et de distribution selon revendication 22, caractérisée par le fait que la pièce de serrage (54) est raccordée, pà la base (52), par force et engagement positif, à l'aide d'une liaison rainure-ressort (55, 56) et par la vis (57), mordant dans la base (52) et s'engageant, avec un entraîneur (57a), dans la pièce de serrage (54) (fig. 21 et 22).

24. Canalisation de service et de distribution selon revendication 1 et 2, caractérisée par le fait que la pièce de serrage (54) présente un canal (9), voisin du jambage d'"U" (6) et protégé, pour câble de communication (10) (fig. 21 et 22).

25. Canalisation de service et de distribution selon les revendications 1 à 24), caractérisée par un capot d'extrémité (58) en matière plastique, fermant les parties frontales du profilé de canalisation (1), emboîtant l'extrémité du profilé de canalisation en engagement positif et maintenues amoviblement sur le profilé de canalisation (1) à l'aide de vis (59) ou analogue, mordant dans des trous (60), pratiqués dans les côtés libres ou les angles des jambages d'"U", se faisant face en diagonale )fig. 1, 17, 19).

26. Canalisation de service et de distribution selon les revendications 1 à 25, caractérisée par une jonction longitudinale de profilé de canalisation (61) en matière plastique, en "U"1, saisissant, trilaéralement, en engagement positif, deux profilés de canalisation (1) voisins, de leur côté ouvert, et dont chacun des deux jambages d'"U" est pourvu une paroi de séparation (62), cette jonction longitudinale (61) est maintenue, de façon amovible, par enfichage, entre les parties frontales de deux profilés de canalisation (1), se dirigeant, à intervalle, l'une vers l'autre (fig. 17, 18).

27. Canalisation de service et de distribution selon les revendications 1 à 26, caractérisée une jonction angulaire (63) en matière plastique, à section transversale en "U", reliant, en tant que coin intérieur ou extérieur, des profilés de canalisation (1) dirigés l'un vers l'autre en cornière, laquelle jonction (63) Présente une âme (64) voûté concavement ou convexement et des jambages d'"U" (65), ainsi que des parois de séparation (66), qui rejoignent, côté, interne, l'âme (64) et les jambages d'"U" (fig. 20).

28. Canalisation de service et de distribution selon les revendications 25 à 27, caractérisée par le fait que les jonctions longitudinales et angulaires (16, 63) et les capots d'extrémité (58) présentent chacun, dans la zone de jointure, entre chape (12) et barres de retenue (11) des jambages d'"U" (2, 6), une rainure (67) en tant que lisière de joint (fig. 17 à 19).

29. Canalisation de service et de distribution selon les revendications 1 à 20 et 25 à 28, caractérisée par un pied de lampe (72), fixé de façon amovible à l'intérieur du profilé de canalisation (1) lequel pied de lampe (72) est composé d'un corps de base (73), qui, s'appuyant sur le canal à vis (26), est pourvu d'une pièce de fixation (74) pour socle de lampe, et d'un adapteur (5) fixé au corps de base (73) et étayé par les pièces d'arrêt (17, 18), ce pied de lampe étant blocable, à l'aide de verrouillages à mi-tour et fermetures à déclic (74, 75), derrière une langue d'arrêt (26a), équipant le canal à vis (26).

30. Canalisation de service et de distribution selon revendication 29, caractérisée par le fait que deux boulons-pivots (74), déplaçables axialement, dont l'une des extrémité est pourvue d'un doigt de verrouillage (75), tandis que l'autre extrémité est équipée d'une tête de vis (76), sont montés, rotatifs, dans le corps de base (73), et maintiennent, leur doigt de verrouillage (75), en position de non fonctionnement, dans une découpe (78), pratiquée dans le corps de base (73), déplaçable et pivotable de 90 degrés contre une force de ressort (77) et verrouillable sous tension de ressort, derrière la langue d'arrêt (26a).

Fig.1

Fig. 2

Fig.3

Fig.3a

Fig.4

Fig.5

Fig.7 A÷A

Fig.6

Fig.8

Fig.9 B÷B

Fig.10 C÷C

Fig.16

Fig.15

Fig.14

Fig.13

Fig.12

Fig.11

Fig. 18
Fig. 18a
Fig. 18b
Fig. 19
Fig. 19a
Fig. 19b
Fig. 20
Fig. 20a
Fig. 17

EP 0 231 428 B1

Fig. 21

Fig. 22

Fig. 23

Fig. 24

Fig. 25

Fig. 26